# EUROPÄISCHE PATENTANMELDUNG

(11) **EP 2 533 031 A1**
(43) Veröffentlichungstag der Anmeldung: **12.12.2012**
(21) Anmeldenummer: 12171241.8
(22) Anmeldetag: 08.06.2012
(51) Int. Cl.: G01N 21/25, G01N 21/47

(54) **Vorrichtung zur referenzierten Messung von reflektiertem Licht und Verfahren zum Kalibrieren einer solchen Vorrichtung**

(30) Priorität: 09.06.2011 DE 102011050969
(71) Anmelder: Carl Zeiss Microscopy GmbH, 07745 Jena (DE)
(72) Erfinder: Margraf, Jörg, 07749 Jena (DE); Lamparter, Peter, 07743 Jena (DE)
(74) Vertreter: Loritz, Rainer

(57) **Zusammenfassung**

Vorrichtung (1) zur referenzierten Messung von reflektiertem Licht an einer Probe (X) und Verfahren zum Kalibrieren einer solchen Vorrichtung.

Die Vorrichtung (1) umfasst eine Lichtquelle (6), zwei Lichtempfänger (4, 5) und einen Hohlkörper (3), der eine Lichtaustrittsöffnung (17) aufweist. Die Vorrichtung ist von einer Mess-Stellung in eine Kalibrier-Stellung umschaltbar, wobei die Lichtaustrittsöffnung (17) in der Mess-Stellung auf einer ersten Detektionsachse (A) und in der Kalibrier-Stellung auf einer zweiten Detektionsachse (B) liegt. Alternativ ist der Hohlkörper (3) einschließlich der Lichtaustrittsöffnung (17) und die Lichtempfänger (4, 5) zum Umschalten der Vorrichtung (1) von einer Mess-Stellung in eine Kalibrier-Stellung um eine von der ersten Detektionsachse (A) verschiedene Achse (Q) drehbar gelagert, wobei der erste Lichtempfänger (4) in beiden Stellungen zum Aufnehmen von durch die Lichtaustrittsöffnung (17) in den Hohlkörper (3) eintretendem Licht und der zweite Lichtempfänger (5) in beiden Stellungen zum Aufnehmen von von der Schicht (15) gestreutem Licht ausgerichtet ist.

## Beschreibung

Die Erfindung betrifft eine Vorrichtung zur Messung von an einer Probe reflektiertem Licht, umfassend einen Hohlkörper, der eine Lichtaustrittsöffnung zur Beleuchtung der Probe und in seinem Inneren eine diffus streuende Schicht aufweist, eine Lichtquelle zur Beleuchtung der Schicht, einen ersten Lichtempfänger, ausgerichtet längs einer ersten Detektionsachse, und einen zweiten Lichtempfänger, ausgerichtet längs einer zweiten Detektionsachse, sowie ein Verfahren zum Kalibrieren einer solchen Vorrichtung. Die diffus streuende Schicht kann durch den Hohlkörper selbst gebildet sein.

Im Sinne der Erfindung umfasst der Begriff Licht jede mit optischen Mitteln manipulierbare elektromagnetische Strahlung, also insbesondere ultraviolette, sichtbares und infrarote Strahlung. Die Detektionsachse eines Lichtempfängers gibt dabei beispielsweise eine Symmetrieachse seines Sichtfeldes an, insbesondere kann es sich um die optische Achse des Lichtempfängers handeln. Geometrisch handelt es sich um eine räumliche Strecke, die in dem betreffenden Lichtempfänger beginnt. Jeder Lichtempfänger kann beispielsweise ein jeweiliges Ende von eines Lichtwellenleiters oder -bündels sein, insbesondere einschließlich einer Einkoppeloptik. Der/die Lichtwellenleiter führen dann beispielsweise zu einem optoelektronischen Wandler, beispielsweise in einem Spektrometer. Ein Spektrometer umfasst beispielsweise einen Eintrittsspalt, ein winkeldispersives Element wie ein Gitter und einen optoelektronischen Wandler sowie optional eine Steuereinheit.

Eine Messvorrichtung der eingangs genannten Art ist beispielsweise aus DE 195 28 855 A1 bekannt, deren Offenbarungsgehalt, insbesondere zur Ermittlung von Strahlungsfunktionen Φ und Remissionsgradfunktionen β, hier soweit als möglich einbezogen wird. Durch die Lichtaustrittsöffnung kann an/in der inneren Schicht gestreutes Licht der Lichtquelle aus dem Hohlkörper austreten. An einer vor der Lichtaustrittsöffnung befindlichen Probe wird das Licht zumindest teilweise zur Lichtaustrittsöffnung remittiert (zurückgestreut und/oder dorthin reflektiert), so dass es wieder in den Hohlkörper eintritt. Ein erster Lichtempfänger ist zur Detektion dieses in den Hohlkörper remittierten Lichts (Messlicht, in dem Eigenschaften der Probe kodiert sind) angeordnet, ein zweiter zur Detektion von innerhalb des Hohlkörpers an/in der diffus streuenden Schicht gestreutem Licht (Referenzlicht, in dem Eigenschaften der Lichtquelle kodiert sind). Die Aufnahme des Referenzlichts dient dazu, die in Reflexion und/oder Transmission gemessenen Strahlungsfunktionen unabhängig von kurzzeitigen Schwankungen der wellenlängenabhängigen optischen Transmissionseigenschaften des Detektionsstrahlengangs und der Emissionscharakteristik der Lichtquelle zu bestimmen.

Solche Messvorrichtungen werden unter anderem bei der Herstellung und/oder bei der Qualitätskontrolle optischer Erzeugnisse eingesetzt. Hier ist es häufig erforderlich, optische Eigenschaften, beispielsweise das Reflexions- und/oder Transmissionsverhalten, in Abhängigkeit von der Lichtwellenlänge zu messen. Ein Beispiel hierfür sind optische Analysen der als Infrarotfilter wirkenden Filterschichten, die Wärmestrahlung zurückhalten, jedoch sichtbares Licht möglichst ungehindert durchlassen sollen. Derartige Filterschichten werden beispielsweise auf Architekturglas oder Fahrzeugscheiben aufgebracht. Ein weiteres Beispiel sind Entspiegelungsschichten, insbesondere für die Breitbandentspiegelung, die innerhalb des Bereichs des sichtbaren Lichtes eine möglichst geringe Reflexion aufweisen sollen. Sowohl während des Herstellungsprozesses der Schichten als auch bei der Endkontrolle der optischen Schichteigenschaften ist eine Messung deren spektraler Abhängigkeiten erforderlich.

Um die in Reflexion und/oder Transmission gemessenen Strahlungsfunktionen der interessierenden Probenflächen unabhängig von langfristigen Veränderungen der wellenlängenabhängigen optischen Transmissionseigenschaften des Detektionsstrahlengangs und der Emissionscharakteristik der Lichtquelle bestimmen zu können, ist es notwendig, die Messvorrichtung durch Vermessung eines Referenzstandards im Detektionsstrahlengang der Messvorrichtung zu kalibrieren. In der Regel wird zumindest ein sogenannter Weiß-Standard verwendet, der einfallendes Licht diffus streut und typischerweise einen maximalen Reflexionsgrad beziehungsweise Transmissionsgrad bei allen an der Probe zu messenden Wellenlängen aufweist.

Bei den bekannten Messvorrichtungen wird zur Kalibrierung entweder der Referenzstandard vor der oder anstelle der Probe in den Detektionsstrahlengang bewegt oder die Messvorrichtung wird in eine Kalibrierposition abseits der Probe verfahren, beispielsweise wie in DE 195 28 855 A1 parallelverschoben. In allen Fällen kommt es durch die Relativbewegung zu Ungenauigkeiten bei der Positionierung des bewegten Objekts. Dadurch befindet sich der Referenzstandard nicht immer in derselben Entfernung von der Lichtaustrittsöffnung wie die Probe. Auch die Neigung des Referenzstandards zur Lichtaustrittsöffnung kann dadurch variieren. Geringe Schwankungen der Entfernung oder Orientierung führen jedoch zu großen Unterschieden bei den gemessenen Lichtintensitäten, also zu einem großen Messfehler der Kalibriermessung. Ein großer Fehler in der Kalibrierung pflanzt sich in die Messung der Probe fort.

Außerdem kann es durch die Relativbewegung zur Störung der Messgeometrie kommen. Beispielsweise verändern sich die optischen Eigenschaften von Lichtleitern, wenn diese bewegt werden. Darüber hinaus kann der Referenzstandard bei den bekannten Messvorrichtungen verschmutzt werden. Das kann insbesondere durch den überwachten Herstellungsprozess geschehen, beispielsweise eine Zerstäubung (engl. "sputtering"). Auch die Umgebungstemperatur kann den Referenzstandard bei den bekannten Messvorrichtungen beeinflussen. Die Genauigkeit der Kalibrierung kann dadurch erheblich beeinträchtigt werden. Zudem ist die Handhabung eines Referenzstandards aufwendig, wenn die Probe im Vakuum bearbeitet und gemessen werden muss.

Der Erfindung liegt die Aufgabe zugrunde, eine Vorrichtung der eingangs genannten Art, die mit höherer Genauigkeit kalibriert werden kann, und ein Kalibrierverfahren für eine solche Vorrichtung anzugeben.

Die Aufgabe wird gelöst durch eine Vorrichtung, welche die in Anspruch 1 oder 10 angegebenen Merkmale aufweist, und durch ein Verfahren, welches die in Anspruch 21 oder 22 angegebenen Merkmale aufweist.

Vorteilhafte Ausgestaltungen der Erfindung sind in den Unteransprüchen angegeben.

Gemäß einem ersten Aspekt der Erfindung ist vorgesehen, dass die Vorrichtung von einer Mess-Stellung in eine Kalibrier-Stellung umschaltbar ist, wobei die Lichtaustrittsöffnung in der Mess-Stellung auf der ersten Detektionsachse (nicht aber auf der zweiten Detektionsachse) und in der Kalibrier-Stellung auf der zweiten Detektionsachse (nicht aber auf der ersten Detektionsachse) liegt. Im Sinne der Erfindung bedeutet eine Aussage, wonach die Lichtaustrittsöffnung auf einer angegebenen Achse liege, dass diese Achse durch die Lichtaustrittsöffnung verläuft. Entsprechendes gilt für die diffus streuende Schicht.

In der Mess-Stellung ist die Lichtaustrittsöffnung so angeordnet, dass sie die Probe beleuchtet und der erste Lichtempfänger durch die Lichtaustrittsöffnung hindurch von der Probe kommendes Licht aufnimmt. In der Kalibrier-Stellung ist die Lichtaustrittsöffnung so angeordnet, dass sie anstelle der Probe einen alternativen Messort beleuchtet, der auf der zweiten Detektionsachse liegt. Die Positionierung der Lichtempfänger und ihre Detektionsachsen bleiben auch beim Umschalten der Stellungen erhalten. Dadurch nimmt in der Kalibrier-Stellung der zweite Lichtempfänger Licht von dem alternativen Messort auf.

Mit derselben Messvorrichtung kann also an zwei verschiedene Messorten gemessen werden, ohne dass die Vorrichtung an einen anderen Ort bewegt werden muss. Insbesondere kann an dem alternativen Messort ein Referenzstandard angeordnet werden und auch permanent verbleiben, ohne dass dieser oder die Vorrichtung zur Vermessung des Referenzstandards (einschließlich der Aufnahme von Referenzlicht von der diffus streuenden Fläche) linear bewegt werden müsste. Vorauszusetzen ist lediglich die Positionierung des Referenzstandards ohne Störung der Probe. Die Vorrichtung kann dadurch mit höherer Genauigkeit kalibriert werden als herkömmliche Messvorrichtungen.

Um eine höchstmögliche Genauigkeit bei der Messung und der Kalibrierung zu erzielen, kann der Abstand zwischen dem ersten Lichtempfänger und der Lichtaustrittsöffnung in der Mess-Stellung identisch dem Abstand zwischen dem zweiten Lichtempfänger und der Lichtaustrittsöffnung in der Kalibrier-Stellung sein. Entsprechend vorteilhaft sind Ausführungsformen, in denen außerhalb des Hohlkörpers ein Halter für einen Referenzstandard oder ein Referenzstandard derart angeordnet ist, dass der Referenzstandard auf der zweiten Detektionsachse liegt. Dadurch kann der Abstand zwischen Referenzstandard und zweitem Lichtempfänger identisch dem Abstand zwischen Probe und erstem Lichtempfänger eingestellt werden. Dieser Abstand kann identisch auch bei späteren Kalibrierdurchgängen beibehalten werden. Das gilt auch für die Neigung des Referenzstandards gegenüber dem zweiten Lichtempfänger. Dadurch kann die Vorrichtung mit höherer Genauigkeit kalibriert werden als herkömmliche Vorrichtungen.

Jeder der Lichtempfänger kann innerhalb des Hohlkörpers oder außerhalb des Hohlkörpers angeordnet sein. Für jeden außerhalb angeordneten Lichtempfänger weist der Hohlkörpers zweckmäßigerweise eine jeweilige Detektionsöffnung auf.

Zweckmäßigerweise kann der Hohlkörper derart ausgebildet sein, dass in der Mess-Stellung ein erster Bereich der diffus streuenden Schicht auf der zweiten Detektionsachse liegt und dass in der Kalibrier-Stellung ein zweiter Bereich der diffus streuenden Schicht auf der ersten Detektionsachse liegt. Dadurch kann in beiden Stellungen Referenzlicht von der diffus streuenden Schicht aufgenommen werden - in der Mess-Stellung mittels des zweiten Lichtempfängers, in der Kalibrier-Stellung mittels des ersten Lichtempfängers. Beim Wechsel von der *Mess-Stellung in die Kalibrier-Stellung tauschen die beiden Lichtempfänger also ihre Funktionen. Unter der Annahme, dass der erste Bereich und der zweite Bereich der diffus streuenden Sicht identische Remissionseigenschaften aufweisen, kann das Verhältnis der Empfindlichkeiten des ersten und des zweiten Lichtempfängers mit geringem Aufwand ermittelt und bei der Kalibrierung verwendet werden.

Die Umschaltbarkeit zwischen den Stellungen wird durch effektives Umplatzieren der Lichtaustrittsöffnung erreicht. Das gelingt beispielsweise mit geringem Aufwand, indem entweder a) die Lichtaustrittsöffnung von einer Lage auf der ersten Detektionsachse in eine Lage auf der zweiten Detektionsachse und entgegengesetzt bewegbar ist oder b) der Hohlkörper eine Referenz-Lichtaustrittsöffnung auf der zweiten Detektionsachse aufweist, wobei die Proben- und die Referenz-Lichtaustrittsöffnungen zumindest alternierend verschließbar sind.

Im Fall a) kann der Hohlkörper beispielsweise derart manipulierbar sein, dass die Lichtaustrittsöffnung zwischen einer ersten Lage, in welcher die erste Detektionsachse durch die Lichtaustrittsöffnung und die zweite Detektionsachse durch die diffus streuende Schicht verlaufen, und einer zweiten Lage, in welcher die erste Detektionsachse durch die diffus streuende Schicht und die zweite Detektionsachse durch die Lichtaustrittsöffnung verlaufen, hin und her bewegbar ist. Insbesondere kann der Hohlkörper zur Bereitstellung dieser Manipulierbarkeit beweglich, insbesondere drehbar, gelagert sein. Alternativ kann auch nur ein die Lichtaustrittsöffnung umfassender Abschnitt des Hohlkörpers beweglich sein, beispielsweise ein um den Hohlkörper herumlaufender Streifen, während der Rest des Hohlkörpers feststeht. Sofern die Vorrichtung ein oder mehrere außerhalb des Hohlkörpers angeordnete Lichtempfänger aufweist, weist der Hohlkörper zweckmäßigerweise für jeden dieser Lichtempfänger eine der Anzahl möglicher Stellungen entsprechende Zahl von Detektionslöchern auf. Vorzugsweise sind jeweils zwei Detektionslöcher benachbarter Lichtempfänger dabei miteinander identisch.

Im Fall b) weist der Hohlkörper zwei Mess-Lichtaustrittsöffnungen auf, wobei die erste Detektionsachse durch die Proben-Lichtaustrittsöffnung und die zweite Detektionsachse durch die Referenz-Lichtaustrittsöffnung verlaufen. Zu diesem Zweck kann beispielsweise ein Verschluss innerhalb oder außerhalb des Hohlkörpers angeordnet sein, der zwischen Proben-Lichtaustrittsöffnung und Referenz-Lichtaustrittsöffnung hin und her beweglich ist. Alternativ können beiden Lichtaustrittsöffnungen unabhängig voneinander verschließbar sein, beispielsweise durch eine jeweilige Blende, insbesondere durch Irisblenden.

Zweckmäßigerweise ist der erste Lichtempfänger ausgerichtet zum Aufnehmen von durch die Lichtaustrittsöffnung in den Hohlkörper eintretendem Licht in der Mess-Stellung und von der Schicht gestreutem Licht in der Kalibrier-Stellung. Zweckmäßigerweise ist der zweite Lichtempfänger der zweite Lichtempfänger ausgerichtet zum Aufnehmen von von der Schicht gestreutem Licht in der Mess-Stellung und durch die Lichtaustrittsöffnung in den Hohlkörper eintretendem Licht in der Kalibrier-Stellung.

Der erste Lichtempfänger ist vorzugsweise optisch so ausgebildet, dass er in der Mess-Stellung ausschließlich durch die Lichtaustrittsöffnung in den Hohlkörper eintretendes Licht aufnimmt. Der zweite Lichtempfänger ist vorzugsweise optisch so ausgebildet, dass er in der Mess-Stellung ausschließlich von der inneren Schicht gestreutes Licht aufnimmt. Dazu kann den Lichtempfängern beispielsweise eine jeweilige Blende und/oder eine jeweilige Linsenoptik vorgeschaltet sein.

Besonders vorteilhaft sind Ausführungsformen, in denen die Lichtempfänger und die Detektionsachsen unabhängig von den Stellungen raumfest sind. Dadurch werden Probleme aufgrund ungenauer Positionierung und optischer Veränderungen durch bewegte Lichtwellenleiter vermieden.

Eine besonders genaue Kalibrierung ermöglicht eine Ausführungsform, in der ein Winkel, den die zweite Detektionsachse in der Mess-Stellung mit einer Flächennormalen der diffus reflektierenden Schicht an einem Durchstoßpunkt der zweiten Detektionsachse durch die Schicht einschließt, identisch ist mit einem Winkel, den die erste Detektionsachse in der Kalibrier-Stellung mit einer Flächennormalen der diffus reflektierenden Schicht an einem Durchstoßpunkt der ersten Detektionsachse durch die Schicht einschließt. Dadurch ist die Messgeometrie beim Vermessen des Referenzstandards in der weitestgehend identisch mit der Messgeometrie beim Messen der Probe in der Mess-Stellung.

Insbesondere kann in der Mess-Stellung die erste Detektionsachse (vorzugsweise für ausschließlich diffus reflektierende Proben) mit einer Mittelachse der Lichtaustrittsöffnung identisch sein oder (vorzugsweise für teilweise gerichtet reflektierende Proben) einen Winkel von 8° einschließt.

Die Vorrichtung kann in einer besonderen Ausführungsform zusätzlich in eine Referenzier-Stellung umschaltbar sein, in welcher die erste und die zweite Detektionsachse durch die diffus streuende Schicht verlaufen. Dadurch kann die relative Empfindlichkeit, also das Verhältnis der Empfindlichkeiten, des ersten Lichtempfängers und des zweiten Lichtempfängers ermittelt werden, indem beispielsweise der Quotient der Signalwerte der Lichtempfänger berechnet wird. Zwar sind die beiden Lichtempfänger in der Referenzier-Stellung auf verschiedene Orte der Schicht ausgerichtet. Bei hinreichender Homogenität der Schicht ist das Streuverhalten jedoch identisch.

Insbesondere kann in der Referenzier-Stellung ein in der Mess-Stellung auf oder nahe bei der zweiten Detektionsachse liegender Ort der diffus streuenden Schicht auf oder nahe bei der ersten Detektionsachse liegen. Im Sinne der Erfindung bedeutet "nahe bei" einen Abstand von weniger als einem Durchmesser der Lichtaustrittsöffnung des Hohlkörpers. In dieser besonders vorteilhaften Referenzier-Stellung kann derjenige Bereich der diffus streuenden Schicht mit dem ersten Lichtempfänger detektiert werden, von dem in der Mess-Stellung mittels des zweiten Lichtempfängers das Referenzlicht aufgenommen wird. Dies dient vorteilhafterweise dazu, die relative Empfindlichkeit des ersten Lichtempfängers und des zweiten Lichtempfängers durch Lichtaufnahme von (zumindest näherungsweise) demselben Ort der Schicht mit hoher Genauigkeit zu ermitteln.

In einer weiteren vorteilhaften Ausführungsform kann die Vorrichtung einen dritten Lichtempfänger umfassen, ausgerichtet längs einer dritten Detektionsachse, wobei die Vorrichtung zusätzlich in eine Hilfs-Kalibrier-Stellung umschaltbar ist, in welcher die Lichtaustrittsöffnung auf der dritten Detektionsachse liegt, insbesondere mit Anordnung eines Halters für einen Zusatz-Referenzstandard oder eines Zusatz-Referenzstandards derart, dass der Zusatz-Referenzstandard außerhalb des Hohlkörpers auf der dritten Detektionsachse liegt. Die Lichtaustrittsöffnung ist in der Hilfs-Kalibrier-Stellung so angeordnet, dass sie einen zweiten alternativen Messort beleuchtet. Zu diesem Zweck kann der Hohlkörper entsprechend manipulierbar sein. Ist der dritte Lichtempfänger außerhalb des Hohlkörpers angeordnet, so weist dieser für den dritten Lichtempfänger drei Detektionslöcher auf, die teilweise mit anderen Detektionslöchern, sofern vorhanden, zusammenfallen können. Der dritte Lichtempfänger kann in der dritten Stellung zur Vermessung des Hilfs-Referenzstandards dienen, der auf der dritten Detektionsachse angeordnet ist und dort insbesondere permanent verbleiben kann. Bei dem Hilfs-Referenzstandard kann es sich beispielsweise um einen Grau-Standard mit einem Remissionsgrad von 50% handeln. Anhand einer auf diese Weise ermittelten Remissionsgradfunktion des Hilfs-Referenzstandards kann beispielsweise durch eine Steuereinheit der Vorrichtung geprüft werden, ob ein die Lichtaustrittsöffnung verschließendes Schutzfenster signifikant verschmutzt ist. Falls ja, kann die Steuereinheit eine optische oder akustische Warnmeldung ausgeben.

Vorzugsweise ist zum Umschalten der Vorrichtung zwischen allen Stellungen der Hohlkörper drehbar gelagert, vorzugsweise um genau eine Drehachse.

Gemäß einem zweiten Aspekt der Erfindung ist vorgesehen, dass der Hohlkörper einschließlich der Lichtaustrittsöffnung und die Lichtempfänger zum Umschalten der Vorrichtung von einer Mess-Stellung in eine Kalibrier-Stellung um eine von der ersten Detektionsachse verschiedene Achse drehbar gelagert sind, wobei der erste Lichtempfänger in beiden Stellungen zum Aufnehmen von durch die Lichtaustrittsöffnung in den Hohlkörper eintretendem Licht und der zweite Lichtempfänger in beiden Stellungen zum Aufnehmen von von der Schicht gestreutem Licht ausgerichtet ist.

Mit derselben Messvorrichtung kann also an zwei verschiedene Messorten gemessen werden, ohne dass die Vorrichtung an einen anderen Ort bewegt werden muss. Insbesondere kann an dem alternativen Messort ein Referenzstandard angeordnet werden und auch permanent verbleiben, ohne dass dieser oder die Vorrichtung zur Vermessung des Referenzstandards (einschließlich der Aufnahme von Referenzlicht von der diffus streuenden Fläche) linear bewegt werden müsste. Vorauszusetzen ist lediglich die (einmalige) Positionierung des Referenzstandards ohne Störung der Probe. Die Vorrichtung kann dadurch mit höherer Genauigkeit kalibriert werden als herkömmliche Messvorrichtungen.

Entsprechend vorteilhaft sind Ausführungsformen, in denen außerhalb des Hohlkörpers ein Halter für einen Referenzstandard oder ein Referenzstandard derart angeordnet ist, dass der Referenzstandard in der Kalibrier-Stellung auf der ersten Detektionsachse liegt. Dadurch kann der Abstand zwischen Referenzstandard und erstem Lichtempfänger identisch dem Abstand zwischen Probe und erstem Lichtempfänger eingestellt werden. Dieser Abstand kann identisch auch bei späteren Kalibrierdurchgängen beibehalten werden. Dasselbe gilt für die Neigung des Referenzstandards gegenüber dem ersten Lichtempfänger.

Die nachfolgend aufgeführten Varianten gelten für beide Aspekte der Erfindung.

Es ist vorteilhaft, eine Bewegung des Hohlkörpers durch einen oder mehrere Anschläge definiert zu begrenzen. Insbesondere bei dem zweiten Aspekt der Erfindung können hierdurch Schwankungen an der relativen Orientierung von Referenzstandard und Hohlkörper vermieden werden.

Vorteilhafterweise kann zwischen dem Halter/Referenzstandard einerseits und der Probe andererseits eine Abschirmung angeordnet sein. Dadurch wird der Referenzstandard vor der Probenumgebung geschützt. Der Referenzstandard kann dadurch mechanisch weniger beeinträchtigt werden, was die Genauigkeit der Kalibrierung langfristig erhält. Vorzugsweise ist in solchen Ausführungsformen die Abschirmung ein Gehäuse um den Halter/Referenzstandard, welches zum Hohlkörper hin geöffnet ist. Dadurch ist der Referenzstandard besonders geschützt. Zweckmäßigerweise ist die Lichtaustrittsöffnung des Hohlkörpers in einem solchen Fall mit einer Schutzscheibe lichtdurchlässig verschlossen. Das Gehäuse um den Referenzstandard kann insbesondere mit einer Dichtung gegenüber einer Umgebung des Gehäuses besonders geschützt werden, was den Einsatz der Messvorrichtung insbesondere im Vakuum mit geringem Aufwand erlaubt, da der Referenzstandard auch während der Bearbeitung und/oder einer Messung an der Probe an Ort und Stelle verbleiben kann.

Alternativ zur Abschirmung nur des Referenzstandards kann die Abschirmung den Hohlkörper, den Halter/Referenzstandard und die Lichtempfänger gegenüber der Probe abschirmen und in einem Bereich, in dem in der Mess-Stellung die Lichtaustrittsöffnung liegt, eine Lichtdurchtrittsöffnung aufweisen, in der eine lichtdurchlässige Schutzscheibe angeordnet ist. Dadurch wird die Messvorrichtung einschließlich des Referenzstandards vor der Probenumgebung geschützt.

Ein besonders hoher Schutz kann erreicht werden, indem die Abschirmung ein gemeinsames Gehäuse um den Hohlkörper, den Halter/Referenzstandard und die Lichtempfänger ist. Auch diese Ausführungsform kann insbesondere im Vakuum mit geringem Aufwand eingesetzt werden, da der Referenzstandard auch während der Bearbeitung und/oder einer Messung an der Probe an Ort und Stelle verbleiben kann.

Vorteilhafterweise kann der Hohlkörper eine Ulbricht-Kugel sein oder eine Ulbricht-Röhre, insbesondere eine Ulbricht-Röhre mit mehreren parallelversetzten Paaren von ersten und zweiten Lichtempfängern, sein. Eine Ulbricht-Röhre ist innen wie eine Ulbricht-Kugel mit Ausnahme von Öffnungen allseitig mit einer diffus streuenden Schicht versehen, weist jedoch im Unterschied zur Kugel beispielsweise einen über einen endlichen Bereich - mit Ausnahme von Öffnungen - translationsinvarianten Querschnitt auf. Zu derartigen Röhren wird auf DE 10 2010 041 749 (A1) verwiesen, deren Offenbarungsgehalt hier soweit als möglich eingeschlossen wird.

Vorzugsweise verlaufen beide Detektionsachsen durch den Hohlkörper. Dadurch kann der Abstand zwischen der Probe und der Lichtaustrittsöffnung in der Mess-Stellung nahe bei Null liegen, was eine hohe Messgenauigkeit ermöglicht.

Die Vorrichtung nach dem ersten Aspekt der Erfindung in allen ihren möglichen Ausführungsformen kann kalibriert werden, indem die Vorrichtung in die Kalibrier-Stellung umgeschaltet und anschließend mittels des zweiten Lichtempfängers durch die Lichtaustrittsöffnung eintretendes Licht als Referenzstandard-Strahlungsfunktion und mittels des ersten Lichtempfängers von der diffusen Schicht gestreutes Licht als Lichtquellen-Strahlungsfunktion aufgenommen und eine Referenzstandard-Remissionsgradfunktion anhand dieser beiden Strahlungsfunktionen ermittelt wird. Die Strahlungsfunktionen können mittels eines dem Lichtempfänger nachgeschalteten Spektrometers wellenlängenabhängig ermittelt werden. Entsprechend kann die Remissionsgradfunktion des Referenzstandards wellenlängenabhängig ermittelt werden.

Nachdem ein Kalibrierverfahren nach dem vorhergehenden Anspruch durchgeführt wurde kann später die Vorrichtung in die Mess-Stellung umgeschaltet werden und anschließend mittels des ersten Lichtempfängers durch die Lichtaustrittsöffnung eintretendes Licht als Proben-Strahlungsfunktion und mittels des zweiten Lichtempfängers von der diffusen Schicht gestreutes Licht als LichtquellenStrahlungsfunktion aufgenommen und eine Proben-Remissionsgradfunktion anhand dieser beiden Strahlungsfunktionen und anhand der im Kalibrierverfahren ermittelten Referenzstandard-Remissionsgradfunktion ermittelt werden. Selbstverständlich kann das Kalibrierverfahren auch erst nach eine oder mehreren Messungen durchgeführt werden. Zweckmäßigerweise wird es vorher und hinterher durchgeführt. Zum Ermitteln von Proben-Remissionsgradfunktionen wird dann beispielsweise eine zwischen den beiden Kalibrierungen interpolierte Referenzstandard-Remissionsgradfunktion verwendet.

Eine Messung von an einer Probe reflektiertem Licht gemäß dem ersten Aspekt der Erfindung kann im allgemeinen Fall folgende Schritte umfassen:
1. Positionieren einer Probe auf einer ersten Detektionsachse,
2. Positionieren eines Referenzstandards auf einer zweiten Detektionsachse,
3. Positionieren einer diffus streuenden Schicht vor der Probe auf der ersten Detektionsachse,
4. Beleuchten der diffus streuenden Schicht zum Erzeugen von diffusem Licht,
5. Lenken eines Teils des erzeugten Lichts auf den Referenzstandard,
6. Aufnehmen von Licht von dem Referenzstandard längs der zweiten Detektionsachse als Referenzstandard-Strahlungsfunktion,
7. Aufnehmen von Licht von der diffus streuenden Schicht längs der ersten Detektionsachse als Lichtquellen-Strahlungsfunktion zur Referenzstandard-Strahlungsfunktion,
8. Entfernen der diffus streuenden Schicht aus der ersten Detektionsachse,
9. Positionieren der diffus streuenden Schicht vor dem Referenzstandard auf der zweiten Detektionsachse,
10. Lenken eines Teils des erzeugten Lichts auf die Probe,
11. Aufnehmen von Licht von der Probe längs der ersten Detektionsachse als Proben-Strahlungsfunktion und
12. Aufnehmen von Licht von der diffus streuenden Schicht längs der zweiten Detektionsachse als Lichtquellen-Strahlungsfunktion zur Proben-Strahlungsfunktion.

Es ist alternativ möglich, den Block bestehend aus den Schritten 3/5/6/7 erst nach dem Block bestehend aus den Schritten 9/10/11/12 auszuführen. Die Reihenfolge der Schritte 6 und 7 ist beliebig, insbesondere können sie gleichzeitig ausgeführt werden. Dasselbe gilt für die Schritte 11 und 12. Die Beleuchtung (Schritt 4) muss selbstverständlich zumindest während der Aufnahme-Schritte (5/6/7 und 10/11/12) aufrechterhalten werden. Die Reihenfolge der Schritte 1, 2 und 3 ist beliebig, insbesondere können sie gleichzeitig ausgeführt werden.

Das Positionieren und Entfernen der Schicht kann durch Translation und/oder Rotation der Schicht erfolgen. Es können sich jeweils unterschiedliche Bereiche der Schicht auf der jeweiligen Detektionsachse befinden.

Die obigen Schritte können beispielsweise von einem jeweiligen Software-Modul ausgeführt werden. Alternativ kann ein Software-Modul mehrere oder alle Schritte ausführen.

Als Ergebnis der Messung mit einer der beschriebenen Vorrichtungen soll eine Proben-Remissionsgradfunktion ermittelt werden. Das gelingt durch folgende Schritte:
- Ermitteln einer Referenzstandard-Remissionsgradfunktion anhand der Referenzstandard-Strahlungsfunktion und anhand der Lichtquellen-Strahlungsfunktion zur Referenzstandard-Strahlungsfunktion,
- Ermitteln einer Proben-Remissionsgradfunktion anhand der Proben-Strahlungsfunktion und anhand der Lichtquellen-Strahlungsfunktion zur Proben-Strahlungsfunktion.

Auch diese Schritte können beispielsweise von einem jeweiligen Software-Modul ausgeführt werden. Alternativ kann ein Software-Modul mehrere oder alle Schritte ausführen.

Zweckmäßigerweise wird die Referenzstandard-Remissionsgradfunktion mittels der relativen Empfindlichkeit des ersten und des zweiten Lichtempfängers an die unterschiedlichen Empfindlichkeiten angepasst, bevor die Proben-Remissionsgradfunktion ermittelt wird.

Das Ermitteln der Referenzstandard-Remissionsgradfunktion anhand der Referenzstandard-Strahlungsfunktion und anhand der Lichtquellen-Strahlungsfunktion zur Referenzstandard-Strahlungsfunktion kann irgendwann nach dem Aufnehmen der Referenzstandard-Strahlungsfunktion und der Lichtquellen-Strahlungsfunktion zur Referenzstandard-Strahlungsfunktion (obige Schritte 6/7) durchgeführt werden, es muss nicht erst unmittelbar vor dem Ermitteln der Proben-Remissionsgradfunktion durchgeführt werden.

Vorzugsweise wird das Licht von Referenzstandard und das Licht von der Probe durch eine Lichtaustrittsöffnung eines Hohlkörpers, in dem die diffus streuende Schicht angeordnet ist, aufgenommen.

Bei allen Aspekten der Erfindung liegen die zwei oder drei Detektionsachsen vorzugsweise alle in derselben Raumebene.

Die Erfindung umfasst auch Computerprogramme und Steuereinheiten, die zur Durchführung eines solchen Kalibrier- oder Messverfahrens eingerichtet sind, insbesondere durch obengenannte Software-Module. Auch umfasst ist eine Vorrichtung mit einer solchen Steuereinheit.

Die Erfindung ist insbesondere zur wiederholten Messung während eines kontinuierlichen Herstellungsprozesses (engl. "in line") oder bei der fortlaufenden Prüfung einer großflächigen Probe geeignet, die kontinuierlich an der Vorrichtung vorbeigeführt wird.

Neben der Messung von an einer Probe reflektiertem Licht kann die Vorrichtung alternativ oder simultan bei der Messung von durch die Probe transmittiertem Licht eingesetzt werden. Dazu ist mindestens ein Lichtempfänger auf der der Lichtaustrittsöffnung gegenüberliegenden Seite der Probe notwendig. Bei beiden Aspekten der Erfindung kann die Transmission nur im der Mess-Stellung gemessen werden.

Nachfolgend wird die Erfindung anhand von Ausführungsbeispielen näher erläutert.

In den Zeichnungen zeigen:
Fig. 1 eine erste Messvorrichtung in Mess-Stellung und in Kalibrier-Stellung,
Fig. 2 eine zweite Messvorrichtung in Mess-Stellung und in Kalibrier-Stellung,
Fig. 3 ein Flussdiagramm eines Mess- und Kalibrierverfahrens zur zweiten Messvorrichtung und
Fig. 4 eine dritte Messvorrichtung in einer dritten Stellung.

In allen Zeichnungen tragen übereinstimmende Teile gleiche Bezugszeichen.

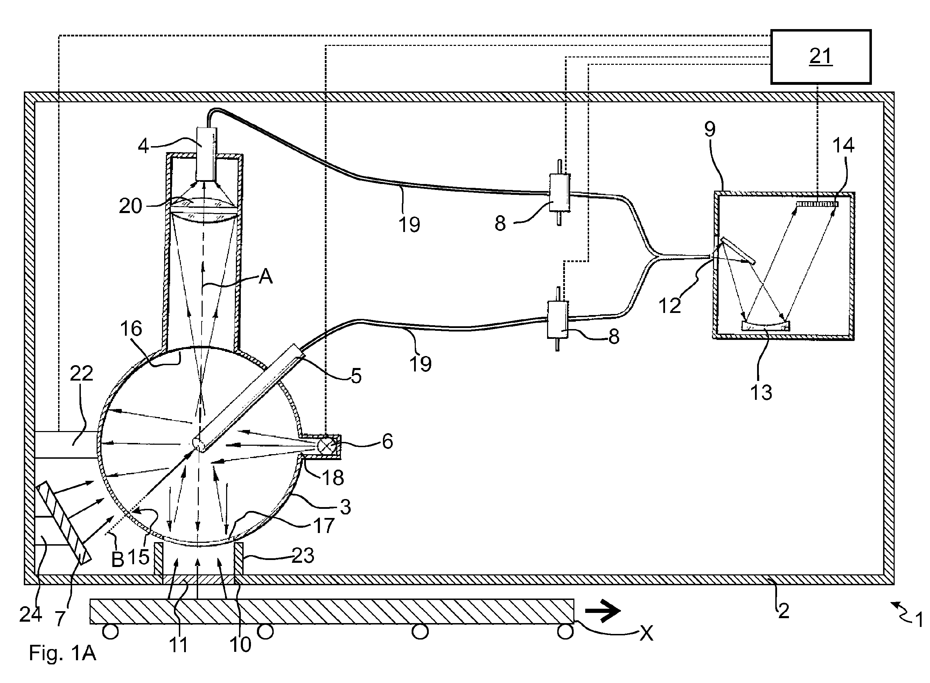

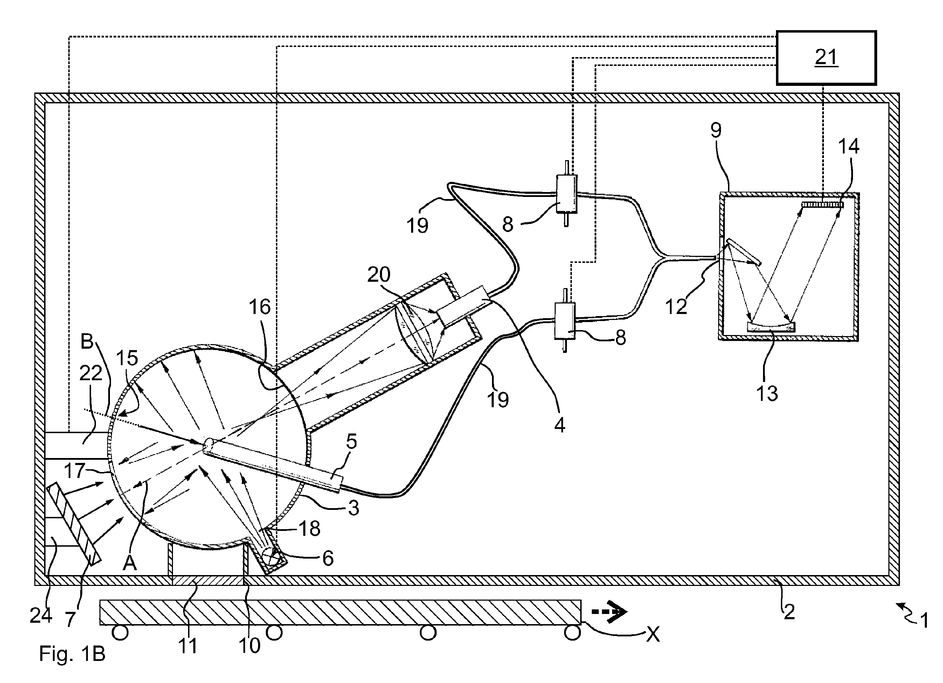

**Fig. 1** zeigt einen Querschnitt einer beispielhaften Messvorrichtung 1 gemäß dem zweiten Aspekt der Erfindung, die zwischen einer Mess-Stellung und einer Kalibrier-Stellung umschaltbar ist. In Teilfigur 1A ist die Vorrichtung 1 in Mess-Stellung, in Teilfigur 1B in Kalibrier-Stellung abgebildet. Die Vorrichtung 1 ist Teil einer Produktionsüberwachungsanlage, in der eine Probe X, beispielsweise beschichtetes Flachglas, an der Vorrichtung 1 vorübergeführt wird.

Die Vorrichtung 1 umfasst ein Gehäuse 2, in dem ein Hohlkörper 3 in Gestalt einer Ulbricht-Kugel, ein erster Lichtempfänger 4 und ein zweiter Lichtempfänger 5 jeweils in Gestalt einer Einkoppelstelle in jeweilige Lichtwellenleiter, eine Lichtquelle 6, ein Referenzstandard 7, zwei optische Verschlüsse 8 und ein Spektrometer 9 eingeschlossen sind. Das Gehäuse 2 weist eine Lichtdurchtrittsöffnung 10 mit einer lichtdurchlässigen Schutzscheibe 11 auf. Im Spektrometer 9 sind beispielhaft ein Eintrittsspalt 12, ein abbildendes Beugungsgitter 13 und ein optoelektronischer Detektor 14, beispielsweise aus Silizium, angeordnet. Der Referenzstandard ist in einem Halter 24 angeordnet.

Der Hohlkörper 3 ist auf seiner Innenseite mit einer diffus streuenden Schicht 15 versehen, beispielsweise einem Weißbelag aus Bariumsulfat, und weist beispielsweise drei Öffnungen auf: An die Lichteintrittsöffnung 16 ist beispielhaft ein Blindstutzen mit der Lichtquelle 6 zur Beleuchtung der Schicht 15 angeschlossen. Das von der Lichtquelle 6 abgegebene Licht wird an der Schicht 15 diffus reflektiert, so dass sich im Hohlkörper 3 Licht in alle Raumrichtungen ausbreitet, wodurch sich die diffuse Reflexion an der Schicht 15 vielfach wiederholt.

Ein Teil des derart gestreuten Lichts kann den Hohlkörper 3 durch die Lichtaustrittsöffnung 17 verlassen. In Abhängigkeit der Stellung der Vorrichtung 1 gelangt es dann entweder zur Probe X (Mess-Stellung) oder zum Referenzstandard 7 (Kalibrier-Stellung). Von dort wird es zumindest teilweise durch die Lichtaustrittsöffnung 17 in den Hohlkörper 3 remittiert, wo es von dem ersten Lichtempfänger 4 aufgenommen wird. Der Lichtempfänger 4 ist auf die Lichtaustrittsöffnung 17 ausgerichtet und nimmt ausschließlich einen Teil des durch die Lichtaustrittsöffnung 17 in den Hohlkörper gelangenden Lichts auf. Zu diesem Zweck ist dem ersten Lichtempfänger 4 eine Sammeloptik vorgeschaltet. Ein anderer Teil des an der Schicht 15 gestreuten Lichts wird von dem zweiten Lichtempfänger 5 aufgenommen, dem beispielsweise eine röhrenförmige Blende vorgeschaltet ist, die durch ein Detektorloch 18 in den Hohlkörper 3 eingeführt ist. Die Blende ist auf der Außenseite beispielsweise ebenso diffus streuend beschichtet wie die Innenseite des Hohlkörpers 3.

Beide Lichtempfänger 4, 5 sind als Enden von Lichtwellenleitern 19 mit jeweiligen Einkoppeloptiken 20 ausgeführt. Die Lichtwellenleiter 19 leiten das aufgenommene Licht durch die verschließbaren Verschlüsse 8 weiter zum Spektrometer 9. In Abhängigkeit der Einstellung der Verschlüsse 8 detektiert das Spektrometer 9 entweder das vom ersten Lichtempfänger 4 aufgenommene Messlicht, welches durch die Lichtaustrittsöffnung 17 in den Hohlkörper eingetreten ist, oder das vom zweiten Lichtempfänger 5 von der Schicht 15 her aufgenommene Referenzlicht, das die momentane Lichtquellenstrahlung repräsentiert und zur Kompensation von Helligkeitsschwankungen der Lichtquelle 6 verwendet wird. Im Spektrometer 9 wird das durch den Spalt 12 einfallende Licht durch das Gitter 13 räumlich-spektral aufgespaltet und auf den Detektor 14 geleitet, wo es spektral aufgelöst detektiert werden kann. Der Detektor 14 ist mit einer Steuereinheit 21 verbunden, die neben der Messwerterfassung zur Steuerung der Verschlüsse 8, der Lichtquelle 6 und der Stellung der Vorrichtung 1 mittels eines Antriebs 22 eingerichtet ist.

Der Antrieb 22 ist so ausgebildet, dass die Ulbricht-Kugel 3 um eine ihrer Mittelachsen gedreht werden kann, beispielsweise um die Mittelachse, die senkrecht in die Zeichenebene hineinragt. Bei einer solchen Drehung drehen sich die Lichtempfänger 4, 5 mit dem Hohlkörper 3 mit, da sie im abgebildeten Fall starr mit dem Hohlkörper 3 verbunden sind. Die Umschaltung von der Mess- in die Kalibrier-Stellung erfolgt nun durch Drehen des Hohlkörpers 3 mittels des Antriebs 22 derart, dass die Lichtaustrittsöffnung 17 und die durch die Lichtaustrittsöffnung 17 verlaufende erste Detektionsachse A des ersten Lichtempfängers 4 nicht mehr auf die Probe X, sondern auf den Referenzstandard 7 gerichtet ist. Auch die zweite Detektionsachse B dreht sich bei dieser Bewegung mit. Der zweite Lichtempfänger 5 nimmt dadurch in diesem Beispiel unabhängig von der Stellung der Vorrichtung 1 stets Referenzlicht von derselben Stelle der diffus streuenden Schicht 15 auf.

Die von dem ersten Lichtempfänger 4 in der Kalibrier-Stellung abgegebenen Signale werden von der Steuereinheit 21 digitalisiert und als Referenzstandard-Strahlungsfunktion gespeichert. Die von dem zweiten Lichtempfänger 5 in der Kalibrier-Stellung abgegebenen Signale werden von der Steuereinheit 21 digitalisiert und als Lichtquellen-Strahlungsfunktion gespeichert. Anhand dieser beiden Strahlungsfunktionen ermittelt die Steuereinheit 21 die Referenzstandard-Remissionsgradfunktion beispielsweise gemäß DE 195 28 855 A1.

Zur Messung von Probeneigenschaften schaltet die Steuereinheit 21 die Vorrichtung 1 mittels des Antriebs 22 in die Mess-Stellung um. Die erste Detektionsachse A verläuft daraufhin durch die Probe X. Die von dem ersten Lichtempfänger 4 in der Mess-Stellung abgegebenen Signale werden von der Steuereinheit 21 digitalisiert und als Proben-Strahlungsfunktion des momentanen Messorts gespeichert. Die von dem zweiten Lichtempfänger 5 in der Mess-Stellung abgegebenen Signale werden von der Steuereinheit 21 digitalisiert und als Lichtquellen-Strahlungsfunktion zu der Proben-Strahlungsfunktion gespeichert. Anhand dieser beiden Strahlungsfunktionen und anhand der Referenzstandard-Remissionsgradfunktion ermittelt die Steuereinheit 21 die Proben-Remissionsgradfunktion für den momentanen Messortbeispielsweise gemäß DE 195 28 855 A1.

Durch Analyse der Proben-Remissionsgradfunktion kann die Steuereinheit beispielsweise einen Wert einer Probeneigenschaft überwachen und mit einem SollWert oder Soll-Intervall vergleichen. Falls sie eine Abweichung feststellt, kann sie diese beispielsweise protokollieren und/oder eine optische und/oder akustische Warnung ausgeben.

Das Gehäuse 2 weist beispielsweise einen zylinderförmigen Wandabschnitt 23 auf, der beispielsweise als Lichtleiteinrichtung im Sinne von DE 38 188 15 A1 ausgebildet sein kann. Auf den Wandabschnitt 23 kann aber auch verzichtet werden.

In möglichen alternativen Ausführungsformen (nicht abgebildet) können die Lichtempfänger 4, 5 unabhängig von dem Hohlkörper 3 drehbar gelagert sein, wenn die Drehachse dieser Bewegung identisch ist mit der Drehachse Q des Hohlkörpers 3.

Die gezeigte Ausführungsform hat den Nachteil, dass die Messung durch die Bewegung der Lichtwellenleiter 19 beim Umschalten der Stellungen beeinträchtigt werden kann.

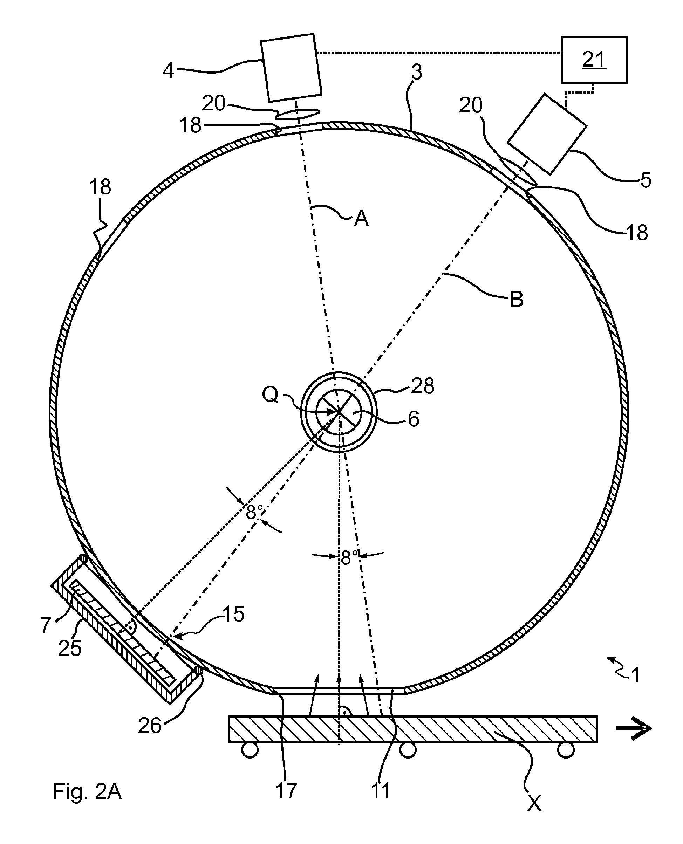

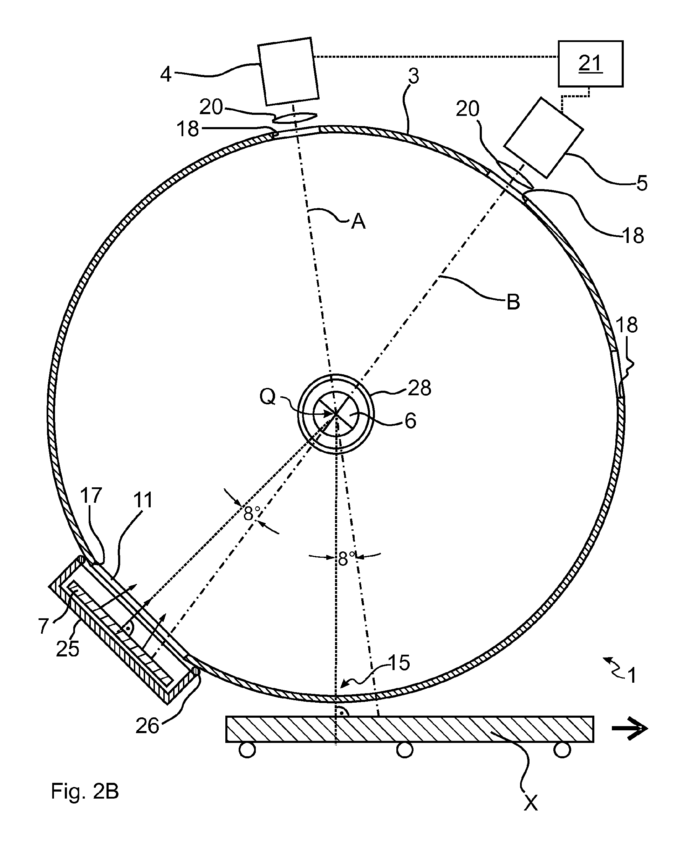

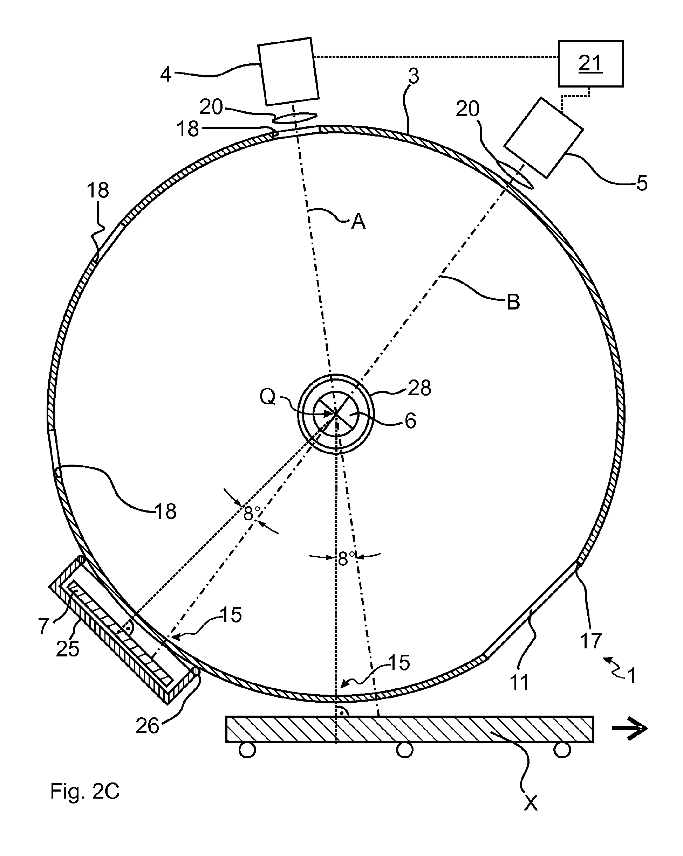

In **Fig. 2** ist eine Messvorrichtung 1 gemäß dem ersten Aspekt der Erfindung im Querschnitt dargestellt, die diesen Nachteil nicht aufweist. Teilfigur 2A zeigt die Vorrichtung 1 in Mess-Stellung, Teilfigur 2B in Kalibrier-Stellung und Teilfigur 2C in Referenzier-Stellung. Die Vorrichtung 1 ist beispielsweise Teil einer Produktionsüberwachungsanlage, in der eine Probe X, beispielsweise beschichtetes Flachglas, an der Vorrichtung 1 vorübergeführt wird.

Die Vorrichtung 1 umfasst einen Hohlkörper 3 in Gestalt einer Ulbricht-Kugel, einen ersten Lichtempfänger 4, einen zweiter Lichtempfänger 5 jeweils in Gestalt einer Einkoppelstelle in jeweilige Lichtwellenleiter, eine Lichtquelle 6 und einen Referenzstandard 7. Um die Lichtquelle 6 ist eine laterale Abschirmung 28 angeordnet, die eine direkte Lichtausbreitung von der Lichtquelle 6 zu dem Lichtempfängern 4 und 5 verhindert. Der Hohlkörper 3 weist eine Lichtaustrittsöffnung 17 zum Beleuchtung der Probe X mit diffusem Licht auf, die durch eine lichtdurchlässige Schutzscheibe 11 verschlossen ist. Der Referenzstandard ist von einem eigenen Gehäuse 25 umschlossen, das zum Hohlkörper 3 hin geöffnet ist. An der Grenze zum Hohlkörper 3 ist eine Dichtung 26 angeordnet, um den Referenzstandard gegen Einwirkungen aus der Umgebung der Probe X zu schützen.

Der Hohlkörper 3 ist auf seiner Innenseite mit einer diffus streuenden Schicht 15 versehen, beispielsweise einem Weißbelag aus Bariumsulfat. Das von der Lichtquelle 6 abgegebene Licht wird an der Schicht 15 diffus reflektiert, so dass sich im Hohlkörper 3 Licht in alle Raumrichtungen ausbreitet, wodurch sich die diffuse Reflexion an der Schicht 15 vielfach wiederholt. Ein Teil des derart gestreuten Lichts kann den Hohlkörper 3 durch die Lichtaustrittsöffnung 17 verlassen. In Abhängigkeit der Stellung der Vorrichtung 1 gelangt es dann entweder zur Probe X (Mess-Stellung) oder zum Referenzstandard 7 (Kalibrier-Stellung). Von dort wird es zumindest teilweise durch die Lichtaustrittsöffnung 17 in den Hohlkörper 3 remittiert.

Die Vorrichtung 1 kann zwischen der Mess-Stellung und der Kalibrier-Stellung umgeschaltet werden. Der Hohlkörper 3 kann dazu, beispielsweise mittels eines Antriebs wie in Fig. 1, um eine seiner Mittelachsen gedreht werden, beispielsweise um die Mittelachse, die senkrecht in die Zeichenebene hineinragt. Bei einer solchen Drehung drehen sich die Lichtempfänger 4, 5 nicht mit dem Hohlkörper 3 mit, da sie in einem festen Abstand voneinander mit raumfesten Detektionsachsen A beziehungsweise B raumfest positioniert und raumfest orientiert sind, beispielsweise unter einem Winkel von 8° zur Probennormalen (erster Lichtempfänger) beziehungsweise zur Referenzstandardnormalen (zweiter Lichtempfänger). Auch die Detektionsachsen A und B bleiben beim Umschalten konstant. Durch die raumfeste Anordnung der Lichtempfänger 4, 5 sind die Abstände zwischen Probe und erstem Lichtempfänger und zwischen Referenzstandard und zweitem Lichtempfänger nicht nur unabhängig von der Stellung der Vorrichtung 1 konstant, sondern beispielsweise identisch.

In der Mess-Stellung wird das durch die Lichtaustrittsöffnung 17 remittierte Licht von dem ersten Lichtempfänger 4 aufgenommen. Der Lichtempfänger 4 ist längs der ersten Detektionsrichtung A auf die Lichtaustrittsöffnung 17 ausgerichtet und nimmt ausschließlich einen Teil des durch die Lichtaustrittsöffnung 17 in den Hohlkörper 3 gelangenden Lichts auf. Ein anderer Teil des an der Schicht 15 gestreuten Lichts wird von dem zweiten Lichtempfänger 5 längs der zweiten Detektionsrichtung aufgenommen. Die Detektionsachsen A, B beider Lichtempfänger verlaufen durch ein jeweiliges Detektorloch 18 durch den Hohlkörper 3 hindurch. Wie in Fig. 1 können die Lichtempfänger 4, 5 schaltbar mit einem Spektrometer (nicht abgebildet) verbunden werden. Der erste Lichtempfänger 4 dient zur Aufnahme von Messlicht durch die Lichtaustrittsöffnung 17, aus dem die Proben-Strahlungsfunktion des momentanen Messorts der Probe ermittelt wird. Der zweite Lichtempfänger 5 dient zur Aufnahme von diffusem Referenzlicht, aus dem die Lichtquellen-Strahlungsfunktion zu der Proben-Strahlungsfunktion ermittelt wird.

Die Umschaltung von der Mess- in die Kalibrier-Stellung erfolgt durch Drehen des Hohlkörpers 3 derart, dass die Lichtaustrittsöffnung 17 nicht mehr auf der ersten Detektionsachse A, sondern auf der zweiten Detektionsachse B liegt. Der erste Lichtempfänger 4 ist dann nicht mehr auf die Probe X, sondern auf die diffus streuende Schicht 15 ausgerichtet. Der zweite Lichtempfänger 5 ist dann nicht mehr auf die diffus streuende Schicht 15, sondern auf den Referenzstandard 7 ausgerichtet. Nun dient der zweite Lichtempfänger 5 zur Aufnahme von Messlicht durch die Lichtaustrittsöffnung 17, aus dem die Referenzstandard-Strahlungsfunktion ermittelt wird. Der erste Lichtempfänger 5 dient nun hingegen zur Aufnahme von diffusem Referenzlicht, aus dem die Lichtquellen-Strahlungsfunktion zu der Referenzstandard-Strahlungsfunktion ermittelt wird.

Um die Referenzstandard-Remissionsgradfunktion auf die an sich bekannte Weise zur Berechnung der Proben-Remissionsgradfunktion verwenden zu können, muss die Referenzstandard-Remissionsgradfunktion anhand der relativen Empfindlichkeit der beiden Detektionskanäle von den Lichtempfängern 4, 5 bis hin zum Spektrometer 9 angepasst werden, beispielsweise durch Multiplikation mit der relativen Empfindlichkeit. Die relative Empfindlichkeit kann dabei wellenlängenabhängig sein.

Die relative Empfindlichkeit kann beispielsweise ermittelt werden, indem die Vorrichtung 1 von der Mess-Stellung in die Referenzier-Stellung umgeschaltet wird. Das erfolgt beispielsweise durch Drehen des Hohlkörpers 3 um dieselbe Drehachse Q und denselben Winkel wie beim Umschalten zwischen Mess- und Kalibrier-Stellung, jedoch mit entgegengesetztem Drehsinn. Dadurch ist der erste Lichtempfänger 4 auf dieselbe Stelle der diffus streuenden Schicht 15 ausgerichtet, auf die in der Mess-Stellung der zweite Detektor 5 ausgerichtet ist. Damit kann nun Messlicht für eine Abgleichs-Strahlungsfunktion aufgenommen werden, die im Verhältnis zur Lichtquellen-Strahlungsfunktion in der Mess-Stellung (oder alternativ zu einer in der Referenzier-Stellung mit den zweiten Lichtempfänger 5 aufzunehmenden Lichtquellen-Strahlungsfunktion) die relative Empfindlichkeit der Detektionskanäle beschreibt. Zur Kompensation von Helligkeitsschwankungen der Lichtquelle 6 während der Aufnahme des Messlichts mit dem ersten Lichtempfänger 4 kann auf bekannte Weise Referenzlicht mit dem zweiten Lichtempfänger 5 aufgenommen werden.

Alternativ kann die relative Empfindlichkeit ermittelt werden, indem der Referenzstandard 7 oder ein identischer Referenzstandard anstelle der Probe X platziert und in der Mess-Stellung mit dem ersten Lichtempfänger eine Strahlungsfunktion aufgenommen wird, die (komponentenweise) ins Verhältnis zu einer mit dem zweiten Lichtempfänger aufgenommenen Strahlungsfunktion gesetzt wird. Zur Kompensation von Helligkeitsschwankungen der Lichtquelle 6 während der Aufnahme des Messlichts mit dem ersten Lichtempfänger 4 kann auf bekannte Weise Referenzlicht mit dem zweiten Lichtempfänger 5 aufgenommen werden und umgekehrt.

Zur Messung von Probeneigenschaften schaltet die Steuereinheit 21 die Vorrichtung 1 mittels des Antriebs (nicht abgebildet) in die Mess-Stellung um. Die von dem ersten Lichtempfänger 4 in der Mess-Stellung abgegebenen Signale werden von der Steuereinheit 21 digitalisiert und als Proben-Strahlungsfunktion des momentanen Messorts gespeichert. Die von dem zweiten Lichtempfänger 5 in der Mess-Stellung abgegebenen Signale werden von der Steuereinheit 21 digitalisiert und als Lichtquellen-Strahlungsfunktion zu der Proben-Strahlungsfunktion gespeichert. Anhand dieser beiden Strahlungsfunktionen und anhand der angepassten Referenzstandard-Remissionsgradfunktion ermittelt die Steuereinheit 21 die Proben-Remissionsgradfunktion für den momentanen Messortbeispielsweise gemäß DE 195 28 855 A1.

Durch Analyse der Proben-Remissionsgradfunktion kann die Steuereinheit beispielsweise einen Wert einer Probeneigenschaft überwachen und mit einem SollWert oder Soll-Intervall vergleichen. Falls sie eine Abweichung feststellt, kann sie diese beispielsweise protokollieren und/oder eine optische und/oder akustische Warnung ausgeben.

Die dargestellte Vorrichtung 1 kann wie in Fig. 1 in einem gemeinsamen Gehäuse 2 angeordnet und über Lichtwellenleiter 19 mit einem Spektrometer 22 verbunden sein.

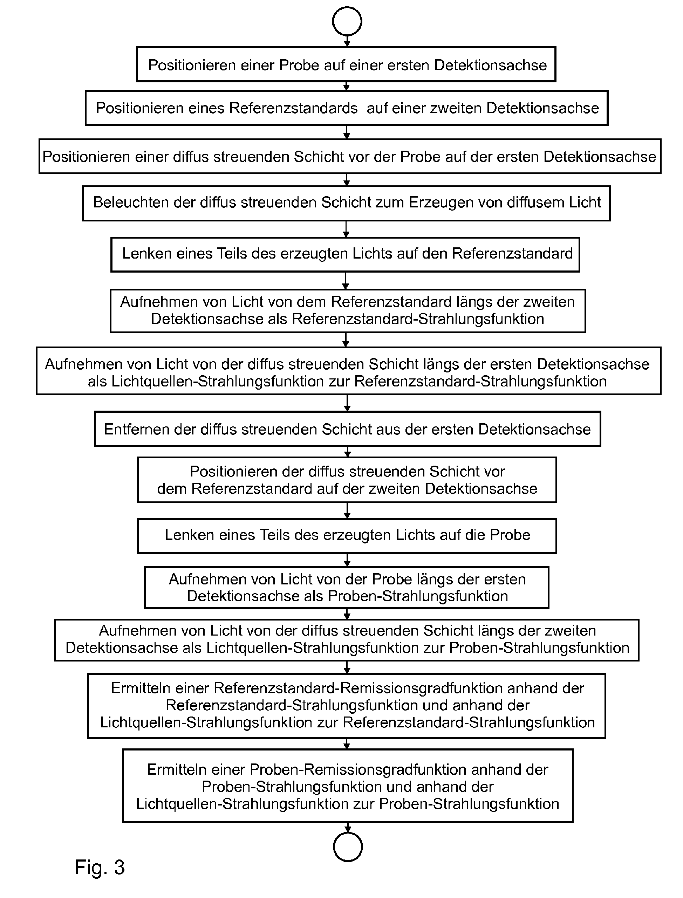

**Fig. 3** zeigt ein Flussdiagramm eines Verfahrens zum Kalibrieren und Messen bei einer Vorrichtung gemäß Fig. 2.

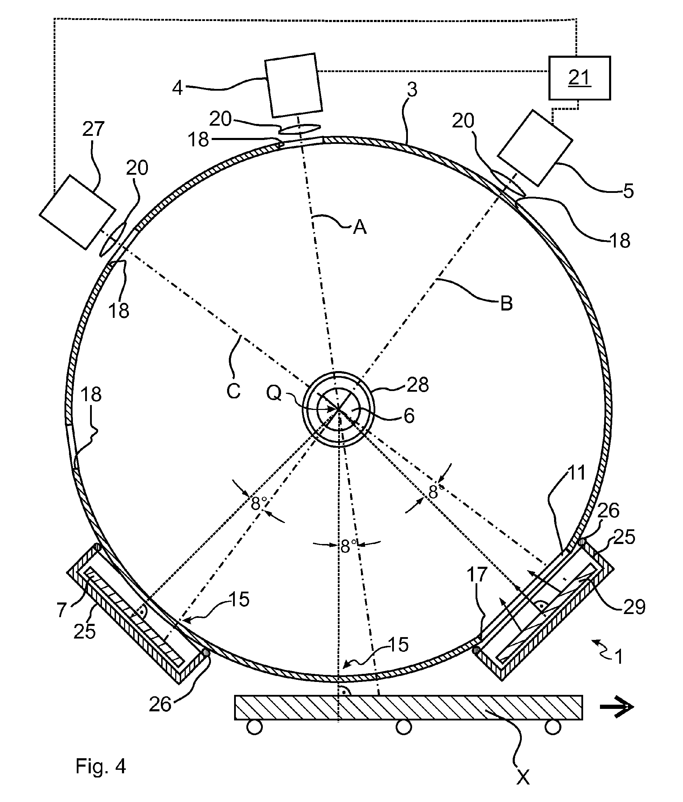

In **Fig. 4** ist eine Vorrichtung 1 ähnlich Fig. 2 dargestellt, die zusätzlich in eine Hilfs-Kalibrier-Stellung umschaltbar ist. In der Abbildung befindet sich die Vorrichtung 1 in dieser Hilfs-Kalibrier-Stellung. Über die Vorrichtung gemäß Fig. 2 hinaus weist die gezeigte Vorrichtung 1 einen dritten Lichtempfänger an dem dritten Detektorloch 18 auf, der längs einer dritten Detektionsachse C ausgerichtet ist, der beispielsweise über einen dritten optischen Verschluss schaltbar mit dem Spektrometer verbunden ist. In der Hilfs-Kalibrier-Stellung liegt die Lichtaustrittsöffnung 17 auf der dritten Detektionsachse C. Auf der auf der dritten Detektionsachse C ist ein Zusatz-Referenzstandard 29 außerhalb des Hohlkörpers 3 angeordnet, der beispielsweise einen mittleren Remissionsgrad von 50% aufweist. Der Zusatz-Referenzstandard 29 ist beispielsweise in einem eigenen Gehäuse 25 mit Dichtung 26 angeordnet, das einen Halter (nicht abgebildet) umfasst. Mittels des dritten Lichtempfängers 27 kann Messlicht vom Zusatz-Referenzstandard 29 aufgenommen werden, um eine zusätzliche Referenzstandard-Remissionsgradfunktion zu ermitteln. In derselben Stellung kann mittels des ersten Lichtempfängers 4 und mittels des zweiten Lichtempfängers 5 Referenzlicht von der Schicht 15 und aufgenommen werden, um die relativen Empfindlichkeiten der Detektionskanäle zu ermitteln.

Anstelle eines gemeinsamen Spektrometers für alle Detektionskanäle können auch alle oder zumindest einige der Detektionskanäle ein separates Spektrometer aufweisen. Die Ermittlung der relativen Empfindlichkeiten zur Anpassung der jeweiligen Strahlungsfunktionen ist dann entsprechend auszuführen.

Von der Erfindung umfasst sind folgende Verfahrensformen:
1. Verfahren zum Kalibrieren einer Vorrichtung (1), wobei die Vorrichtung (1) in die Kalibrier-Stellung umgeschaltet und anschließend mittels des zweiten Lichtempfängers (5) durch die Lichtaustrittsöffnung (17) eintretendes Licht als Referenzstandard-Strahlungsfunktion und mittels des ersten Lichtempfängers (4) von der diffusen Schicht (15) gestreutes Licht als Lichtquellen-Strahlungsfunktion aufgenommen und eine Referenzstandard-Remissionsgradfunktion anhand dieser beiden Strahlungsfunktionen ermittelt wird.
2. Verfahren zum Messen von an einer Probe (X) reflektiertem Licht, wobei ein Kalibrierverfahren nach dem vorhergehenden Aufzählungspunkt durchgeführt wird, später die Vorrichtung (1) in die Mess-Stellung umgeschaltet wird und anschließend mittels des ersten Lichtempfängers (4) durch die Lichtaustrittsöffnung (17) eintretendes Licht als Proben-Strahlungsfunktion und mittels des zweiten Lichtempfängers (5) von der diffusen Schicht (15) gestreutes Licht als Lichtquellen-Strahlungsfunktion aufgenommen und eine Proben-Remissionsgradfunktion anhand dieser beiden Strahlungsfunktionen und anhand der im Kalibrierverfahren ermittelten Referenzstandard-Remissionsgradfunktion ermittelt wird.
3. Verfahren zum Messen von an einer Probe (X) reflektiertem Licht, wobei folgende Schritte durchgeführt werden:
   - Positionieren einer Probe (X) auf einer ersten Detektionsachse (A),
   - Positionieren eines Referenzstandards (7) auf einer zweiten Detektionsachse (B),
   - Positionieren einer diffus streuenden Schicht (15) vor der Probe (X) auf der ersten Detektionsachse (A),
   - Beleuchten der diffus streuenden Schicht (15) zum Erzeugen von diffusem Licht,
   - Lenken eines Teils des erzeugten Lichts auf den Referenzstandard (7),
   - Aufnehmen von Licht von dem Referenzstandard (7) längs der zweiten Detektionsachse (B) als Referenzstandard-Strahlungsfunktion,
   - Aufnehmen von Licht von der diffus streuenden Schicht (15) längs der ersten Detektionsachse als Lichtquellen-Strahlungsfunktion zur Referenzstandard-Strahlungsfunktion,
   - Entfernen der diffus streuenden Schicht (15) aus der ersten Detektionsachse (A),
   - Positionieren der diffus streuenden Schicht (15) vor dem Referenzstandard (7) auf der zweiten Detektionsachse (B),
   - Lenken eines Teils des erzeugten Lichts auf die Probe (X),
   - Aufnehmen von Licht von der Probe (X) längs der ersten Detektionsachse (A) als Proben-Strahlungsfunktion und
   - Aufnehmen von Licht von der diffus streuenden Schicht (15) längs der zweiten Detektionsachse (B) als Lichtquellen-Strahlungsfunktion zur Proben-Strahlungsfunktion.
4. Verfahren nach dem vorhergehenden Aufzählungspunkt, umfassend folgende weiteren Schritte:
   - Ermitteln einer Referenzstandard-Remissionsgradfunktion anhand der Referenzstandard-Strahlungsfunktion und anhand der Lichtquellen-Strahlungsfunktion zur Referenzstandard-Strahlungsfunktion,
   - Ermitteln einer Proben-Remissionsgradfunktion anhand der Proben-Strahlungsfunktion und anhand der Lichtquellen-Strahlungsfunktion zur Proben-Strahlungsfunktion.
5. Verfahren nach dem vorhergehenden Aufzählungspunkt oder dem diesem vorangehenden Aufzählungspunkt, wobei das Licht von Referenzstandard (7) und das Licht von der Probe (X) durch eine Lichtaustrittsöffnung (17) eines Hohlkörpers (3), in dem die diffus streuende Schicht (15) angeordnet ist, aufgenommen wird.

### Bezugszeichenliste

- 1: Messvorrichtung
- 2: Gehäuse
- 3: Hohlkörper
- 4: Erster Lichtempfänger
- 5: Zweiter Lichtempfänger
- 6: Lichtquelle
- 7: Referenzstandard
- 8: Verschluss
- 9: Spektrometer
- 10: Lichtdurchtrittsöffnung
- 11: Schutzscheibe
- 12: Eintrittsspalt
- 13: Gitter
- 14: Detektor
- 15: Diffus streuende Schicht
- 16: Lichteintrittsöffnung
- 17: Lichtaustrittsöffnung
- 18: Detektorloch
- 19: Lichtwellenleiter
- 20: Einkoppeloptik
- 21: Steuereinheit
- 22: Antrieb
- 23: Wandabschnitt
- 24: Halter
- 25: Gehäuse
- 26: Dichtung
- 27: Dritter Lichtempfänger
- 28: Abschirmung
- 29: Zusatz-Referenzstandard
- X: Probe
- A: Erste Detektionsachse
- B: Zweite Detektionsachse
- C: Dritte Detektionsachse
- Q: Drehachse

## Patentansprüche

1. Vorrichtung (1) zur Messung von an einer Probe (X) reflektiertem Licht, umfassend
- einen Hohlkörper (3), der eine Lichtaustrittsöffnung (17) zur Beleuchtung der Probe (X) und in seinem Inneren eine diffus streuende Schicht (15) aufweist,
- eine Lichtquelle (6) zur Beleuchtung der Schicht (15),
- einen ersten Lichtempfänger (4), ausgerichtet längs einer ersten Detektionsachse (A), und
- einen zweiten Lichtempfänger (5), ausgerichtet längs einer zweiten Detektionsachse (B),
**dadurch gekennzeichnet, dass** die Vorrichtung (1) von einer Mess-Stellung in eine Kalibrier-Stellung umschaltbar ist, wobei die Lichtaustrittsöffnung (17) in der Mess-Stellung auf der ersten Detektionsachse (A) und in der Kalibrier-Stellung auf der zweiten Detektionsachse (B) liegt.

2. Vorrichtung (1) nach dem der vorhergehenden Anspruch, wobei der erste Lichtempfänger (4) ausgerichtet ist zum Aufnehmen von:
- durch die Lichtaustrittsöffnung (17) in den Hohlkörper (3) eintretendem Licht in der Mess-Stellung und
- von von der Schicht (15) gestreutem Licht in der Kalibrier-Stellung.

3. Vorrichtung (1) nach dem vorhergehenden Anspruch, wobei der zweite Lichtempfänger (5) ausgerichtet ist zum Aufnehmen von:
- von der Schicht (15) gestreutem Licht in der Mess-Stellung und
- durch die Lichtaustrittsöffnung (17) in den Hohlkörper (3) eintretendem Licht in der Kalibrier-Stellung.

4. Vorrichtung (1) nach einem der vorhergehenden Ansprüche, wobei die Lichtempfänger (4, 5) und die Detektionsachsen (A, B) unabhängig von den Stellungen raumfest sind.

5. Vorrichtung (1) nach einem der vorhergehenden Ansprüche, wobei ein Winkel, den die zweite Detektionsachse (B) in der Mess-Stellung mit einer Flächennormalen der diffus reflektierenden Schicht (15) an einem Durchstoßpunkt der zweiten Detektionsachse (B) durch die Schicht (15) einschließt, identisch ist mit einem Winkel, den die erste Detektionsachse (A) in der Kalibrier-Stellung mit einer Flächennormalen der diffus reflektierenden Schicht (15) an einem Durchstoßpunkt der ersten Detektionsachse (A) durch die Schicht (15) einschließt

6. Vorrichtung (1) nach einem der vorhergehenden Ansprüche, wobei außerhalb des Hohlkörpers (3) ein Halter (24) für einen Referenzstandard (7) oder ein Referenzstandard (7) derart angeordnet ist, dass der Referenzstandard (7) auf der zweiten Detektionsachse (B) liegt.

7. Vorrichtung (1) nach einem der vorhergehenden Ansprüche, wobei die Vorrichtung (1) zusätzlich in eine Referenzier-Stellung umschaltbar ist, in welcher die erste und die zweite Detektionsachse (A, B) durch die diffus streuende Schicht (15) verlaufen, insbesondere, wobei ein in der Mess-Stellung auf oder nahe bei der zweiten Detektionsachse (B) liegender Ort der diffus streuenden Schicht (15) auf oder nahe bei der ersten Detektionsachse (A) liegt.

8. Vorrichtung nach einem der vorhergehenden Ansprüche, umfassend einen dritten Lichtempfänger (27), ausgerichtet längs einer raumfesten dritten Detektionsachse (C), wobei die Vorrichtung (1) zusätzlich in eine Hilfs-Kalibrier-Stellung umschaltbar ist, in welcher die Lichtaustrittsöffnung (17) auf der dritten Detektionsachse (C) liegt, insbesondere mit Anordnung eines Halters (24) für einen Zusatz-Referenzstandard (28) oder eines Zusatz-Referenzstandards (28) derart, dass der Zusatz-Referenzstandard (28) außerhalb des Hohlkörpers (3) auf der dritten Detektionsachse (C) liegt.

9. Vorrichtung nach einem der vorhergehenden Ansprüche, wobei der Hohlkörper (3) zur Umschaltung zwischen den Stellungen drehbar gelagert ist, vorzugsweise um genau eine Drehachse (Q).

10. Vorrichtung (1) zur Messung von an einer Probe (X) reflektiertem Licht, umfassend
- einen Hohlkörper (3), der eine Lichtaustrittsöffnung (17) zur Beleuchtung der Probe (X) und in seinem Inneren eine diffus streuende Schicht (15) aufweist,
- eine Lichtquelle (6) zur Beleuchtung der Schicht (15),
- einen ersten Lichtempfänger (4), ausgerichtet längs einer ersten Detektionsachse (A), und
- einen zweiten Lichtempfänger (5), ausgerichtet längs einer zweiten Detektionsachse (B),
**dadurch gekennzeichnet, dass** der Hohlkörper (3) einschließlich der Lichtaustrittsöffnung (17) und die Lichtempfänger (4, 5) zum Umschalten der Vorrichtung (1) von einer Mess-Stellung in eine Kalibrier-Stellung um eine von der ersten Detektionsachse (A) verschiedene Achse (Q) drehbar gelagert sind, wobei der erste Lichtempfänger (4) in beiden Stellungen zum Aufnehmen von durch die Lichtaustrittsöffnung (17) in den Hohlkörper (3) eintretendem Licht und der zweite Lichtempfänger (5) in beiden Stellungen zum Aufnehmen von von der Schicht (15) gestreutem Licht ausgerichtet ist.

11. Vorrichtung (1) nach dem vorhergehenden Anspruch, wobei außerhalb des Hohlkörpers (3) ein Halter (24) für einen Referenzstandard (7) oder ein Referenzstandard (7) derart angeordnet ist, dass der Referenzstandard (7) in der Kalibrier-Stellung auf der ersten Detektionsachse (A) liegt.

12. Vorrichtung (1) nach einem der vorhergehenden Ansprüche, wobei zwischen dem Halter/Referenzstandard (24/7) einerseits und der Probe (X) andererseits eine Abschirmung angeordnet ist.

13. Vorrichtung (1) nach Anspruch 12, wobei die Abschirmung ein Gehäuse (25) um den Halter/Referenzstandard (24/7) ist, welches zum Hohlkörper (3) hin geöffnet ist, insbesondere mit einer Dichtung (26) gegenüber einer Umgebung des Gehäuses (26).

14. Vorrichtung (1) nach Anspruch 12, wobei die Abschirmung den Hohlkörper (3), den Halter/Referenzstandard (24/7) und die Lichtempfänger (4,5) gegenüber der Probe (X) abschirmt und in einem Bereich, in dem in der Mess-Stellung die Lichtaustrittsöffnung (17) liegt, eine Lichtdurchtrittsöffnung (10) aufweist, in der eine lichtdurchlässige Schutzscheibe (11) angeordnet ist.

15. Verfahren nach dem vorhergehenden Anspruch, wobei die Abschirmung ein gemeinsames Gehäuse (2) um den Hohlkörper (3), den Halter/Referenzstandard (24/7) und die Lichtempfänger (4, 5) ist.

16. Vorrichtung (1) nach einem der vorhergehenden Ansprüche, wobei (der Halter (24) derart angeordnet ist, dass) ein Abstand zwischen dem Referenzstandard (7) und der Lichtaustrittsöffnung (17) in der Kalibrier-Stellung identisch ist zu einem Abstand zwischen der Probe (X) und der Lichtdurchtrittsöffnung (10) in der Mess-Stellung.

17. Vorrichtung (1) nach einem der vorhergehenden Ansprüche, wobei beide Detektionsachsen (A, B) durch den Hohlkörper (3) verlaufen.

18. Vorrichtung (1) nach einem der vorhergehenden Ansprüche, wobei in der Mess-Stellung die erste Detektionsachse (A) mit einer Mittelachse der Lichtaustrittsöffnung (17) identisch ist oder einen Winkel von 8° einschließt.

19. Vorrichtung (1) nach einem der vorhergehenden Ansprüche, wobei ein Winkel, den die zweite Detektionsachse (B) in der Mess-Stellung mit einer Flächennormalen der diffus reflektierenden Schicht (15) an einem Durchstoßpunkt der zweiten Detektionsachse durch die Schicht einschließt, identisch ist mit einem Winkel, den die erste Detektionsachse (A) in der Kalibrier-Stellung mit einer Flächennormalen der diffus reflektierenden Schicht (15) an einem Durchstoßpunkt der ersten Detektionsachse (A) durch die Schicht (15) einschließt.

20. Vorrichtung (1 ) nach einem der vorhergehenden Ansprüche, wobei der Hohlkörper (3) eine Ulbricht-Kugel oder eine Ulbricht-Röhre, insbesondere mit mehreren parallelversetzten Paaren von ersten und zweiten Lichtempfängern (4, 5), ist.
